# EUROPÄISCHE PATENTSCHRIFT

(11) **EP 3 585 666 B1**
(45) Veröffentlichungstag und Bekanntmachung des Hinweises auf die Patenterteilung: **20.04.2022**
(21) Anmeldenummer: 18703241.2
(22) Anmeldetag: 24.01.2018
(51) Int. Cl.: B60T 13/74, B60T 17/22, B60T 1/06, F16D 49/00

(54) **VERFAHREN ZUR DIAGNOSE EINES BREMSSYSTEMS EINES KRAFTFAHRZEUGS SOWIE ENTSPRECHENDES BREMSSYSTEM**
METHOD FOR DIAGNOSTICS ON A BRAKING SYSTEM OF A MOTOR VEHICLE, AND CORRESPONDING BRAKING SYSTEM
PROCÉDÉ DE DIAGNOSTIC D'UN SYSTÈME DE FREINAGE D'U VÉHICULE À MOTEUR AINSI QUE SYSTÈME DE FREINAGE CORRESPONDANT

(30) Priorität: 22.02.2017 DE 102017202813
(43) Veröffentlichungstag der Anmeldung: 01.01.2020
(73) Patentinhaber: Audi AG, 85045 Ingolstadt (DE)
(72) Erfinder: VOLKMAR, Kai, 85080 Gaimersheim (DE)
(86) Internationale Anmeldenummer: PCT/EP2018/051716
(87) Internationale Veröffentlichungsnummer: WO 2018/153607

(56) Entgegenhaltungen:
- EP-A1- 2 671 769
- WO-A2-2009/083216
- DE-A1- 10 224 971
- DE-A1-102006 049 794
- DE-A1-102008 034 769
- DE-T5-112012 005 188

## Beschreibung

Die Erfindung betrifft ein Verfahren zum Betreiben eines Bremssystems für ein Kraftfahrzeug, wobei das Bremssystem über eine Bremsdruckquelle und wenigstens eine Radbremse verfügt, die mit einem mittels der Bremsdruckquelle bereitgestellten, auf einen Bremskolben wirkenden Bremsdruck beaufschlagbar ist. Die Erfindung betrifft weiterhin ein Bremssystem für ein Kraftfahrzeug. DE 102 24 971 A1 D1 beschreibt die Möglichkeit des Anlegens des Bremsbelages an die Bremsscheibe mittels einer Bremsdruckquelle.

Darüber hinaus zeigt WO 2009/083216 A2, wie man aus dem Bremsdruckverlauf das Lüftspiel ermittelt werden kann.

Das Bremssystem dient dem Verzögern des Kraftfahrzeugs, insoweit also dem Bereitstellen einer auf ein Rad des Kraftfahrzeugs wirkenden Bremskraft. Die Bremskraft ist mithilfe der Radbremse auf das wenigstens eine Rad aufprägbar. Verfügt das Kraftfahrzeug über mehr als das eine Rad, also über wenigstens zwei Räder, so weist das Bremssystem vorzugsweise für mehrere dieser Räder oder alle der Räder jeweils eine Radbremse auf, mittels welcher auf das entsprechende Rad die Bremskraft aufprägbar ist. Nachfolgend wird lediglich auf die wenigstens eine Radbremse eingegangen. Die Ausführungen sind jedoch auf mehrere Radbremsen - sofern vorgesehen - übertragbar. Beispielsweise wird an der Radbremse bei der Betätigung eines Bedienelements ein Istbremsdruck angelegt. Das Bremssystem liegt insoweit als Betriebsbremse des Kraftfahrzeugs vor oder bildet zumindest einen Bestandteil der Betriebsbremse.

Das Bremssystem verfügt beispielsweise über einen Hauptbremszylinder, in welchem ein Hauptbremskolben verlagerbar angeordnet ist. Der Hauptbremskolben begrenzt zusammen mit dem Hauptbremszylinder ein Bremsfluidvolumen, welches variabel ist, wobei seine Größe von der Stellung des Hauptbremskolbens abhängig ist. Der Hauptbremskolben ist mit einem Bedienelement gekoppelt, welches beispielsweise als Bremspedal vorliegt. Über das Bedienelement kann ein Fahrer des Kraftfahrzeugs eine gewünschte Bremskraft einstellen, welche nachfolgend als Vorgabebremskraft bezeichnet wird und vorzugsweise in festem Zusammenhang mit einem Vorgabebremsdruck steht. Selbstverständlich kann der Hauptbremszylinder auch entfallen und die Vorgabebremskraft beziehungsweise der Vorgabebremsdruck allein mittels des Bedienelements eingestellt werden.

Das Bremssystem liegt bevorzugt als elektrohydraulisches Bremssystem vor. Das bedeutet, das in zumindest einer Betriebsart des Bremssystems das in dem Bremsfluidvolumen vorliegende Bremsfluid bei einer Betätigung des Bedienelements nicht unmittelbar den an der Radbremse anliegenden Istbremsdruck bereitstellt oder allenfalls einen Teil von diesem bereitstellt. Vielmehr ist vorgesehen, bei der Betätigung des Bedienelements einen Sollbremsdruck zu ermitteln, wobei dies mithilfe wenigstens eines Sensors vorgesehen sein kann, welcher dem Bedienelement und/oder dem Hauptbremskolben und/oder dem Hauptbremszylinder und/oder einem Simulatorzylinder, in welchem ein Simulatorkolben verlagerbar angeordnet ist, zugeordnet ist.

Der Sensor kann beispielsweise als Wegsensor oder als Drucksensor ausgestaltet sein. In ersterem Fall wird mithilfe des Sensors die Betätigungsstrecke des Bedienelements ermittelt, um welche das Bedienelement bei seiner Betätigung verlagert wird. Zusätzlich oder alternativ kann selbstverständlich der in dem Hauptbremszylinder vorliegende Druck mittels des Sensors ermittelt werden. Aus den mithilfe des Sensors gemessenen Größen, also beispielsweise dem Weg und/oder dem Druck, wird anschließend der Sollbremsdruck ermittelt. Nachfolgend wird an der Radbremse ein Istbremsdruck angelegt beziehungsweise eingestellt, welcher dem Sollbremsdruck entspricht.

Der Istbremsdruck wird dabei von der Bremsdruckquelle bereitgestellt, welche beispielsweise in Form einer Pumpe vorliegt, insbesondere einer elektrisch betriebenen Pumpe. In der vorstehend beschriebenen Betriebsart des Bremssystems ist insoweit das Bremsfluidvolumen nicht oder zumindest nicht unmittelbar mit der Radbremse verbunden beziehungsweise strömungsverbunden. Zur Bereitstellung einer Rückfallebene bei einem Defekt des Bremssystems, beispielsweise bei einem Ausfall der Bremsdruckquelle, liegt vorzugsweise eine unmittelbar Strömungsverbindung zwischen dem Hauptbremszylinder und der Radbremse vor. Auf diese Art und Weise kann auch bei einem Defekt des Bremssystems bei einer Betätigung des Bedienelements an der Radbremse ein Istbremsdruck aufgebaut werden. Hierzu muss der Fahrer jedoch eine wesentlich größere Bedienkraft auf das Bedienelement aufbringen als üblich.

Es ist nun Aufgabe der Erfindung, ein Verfahren zum Betreiben eines Bremssystems für ein Kraftfahrzeug vorzuschlagen, welches gegenüber bekannten Verfahren Vorteile aufweist, insbesondere unabhängig von dem Antriebssystem einen zuverlässigen Betrieb des Bremssystems ermöglicht.

Dies wird erfindungsgemäß mit einem Verfahren mit den Merkmalen des Anspruchs 1 erreicht. Dabei ist vorgesehen, dass zum Durchführen einer Diagnose des Bremssystems die Radbremse mit einem einem Diagnosebremsdruck entsprechenden, eine bestimmte Kraft auf den Bremskolben bewirkenden Bremsdruck beaufschlagt und auf den Bremskolben eine der Kraft entgegen gerichtete Gegenkraft aufgebracht wird, sodass das Aufbauen einer Bremskraft an der Radbremse unterbunden wird, insbesondere eine mit dem Bremskolben verbundene Bremsbacke beabstandet von einer Bremsscheibe oder einer Bremstrommel der Radbremse verbleibt.

Die Radbremse weist den Bremskolben auf, der vorzugsweise in einem Bremszylinder verlagerbar, insbesondere linear verlagerbar, angeordnet ist. Mittels des Bremskolbens kann eine durch die Beaufschlagung der Radbremse mit Bremsfluid erzeugte Kraft auf eine Bremsbacke der Radbremse aufgeprägt werden, wobei an der Bremsbacke insbesondere ein Bremsbelag vorliegt.

Insbesondere im Zuge der Einführung rekuperationsfähiger Antriebseinrichtungen für Kraftfahrzeuge, bei welchen ein Teil der Bewegungsenergie des Kraftfahrzeugs während eines Bremsvorgangs in eine speicherfähige Energieform, beispielsweise Elektroenergie, überführt wird, gewinnen sogenannte blendingfähige Bremssysteme zunehmend an Bedeutung. Diese können den Bremsdruck beziehungsweise Istbremsdruck, welche an der Radbremse anliegt, unabhängig der von der von dem Fahrer angeforderten Vorgabebremskraft variieren, insbesondere auf eine Istbremskraft einstellen, welche kleiner ist als die Vorgabebremskraft. Die Differenz der an der Radbremse eingestellten Istbremskraft zu der Vorgabebremskraft wird durch Rekuperation unter Verwendung der Antriebseinrichtung bewirkt.

Ein energetisch besonders vorteilhafter Betriebsbereich eines derartigen Kraftfahrzeugs ist jener, bei dem die Verzögerung des Kraftfahrzeugs vollständig durch das Wirken von Triebstrangmomenten realisiert wird. Hierzu muss der Bremsdruck, der auf die Radbremse wirkt, zumindest nahezu oder gleich Null sein, damit durch diese kein Bremsmoment beziehungsweise keine Bremskraft erzeugt wird. Je nach Auslegung des Triebstrangs, insbesondere abhängig von der installierten Rekuperationsleistung, kann der so abgedeckte, rein rekuperativ dargestellte Verzögerungsbereich so groß sein, dass die Mehrzahl oder alle der Verzögerungsvorgänge innerhalb eines Fahrzyklus auf diese Art dargestellt werden können.

An die Betriebsbremse des Kraftfahrzeugs werden aufgrund ihrer elementaren Bedeutung für die Fahrsicherheit höchste Ansprüche bezüglich ihrer Zuverlässigkeit gestellt. Konventionelle Bremssysteme werden diesen durch betriebsbewährte Konstruktion und Auslegung gerecht und bieten zudem durch häufige Betätigung die Möglichkeit, Einschränkungen der Funktion relativ frühzeitig und in statistisch betrachtet wenig gefährlichen Fahrsituationen zu erkennen. Eine wichtige Ausfallursache besteht in Undichtigkeiten des hydraulischen Systems, die zu Verlust von Bremsflüssigkeit und/oder der Unmöglichkeit hydraulischen Druckaufbaus führen.

Die genannten Auswirkungen können selbsttätig (beispielsweise durch Füllstandsmessung im Vorratsbehälter und Aktivieren einer Warnlampe bei Unterschreiten eines Mindestfüllstands) oder durch Mitwirkung des Fahrers (Bewertung des Bremspedalwegs und/oder der Betätigungskraft) erkannt werden. Durch redundante Auslegung der Bremskreise und sich in den meisten Fällen nur schleichend vergrößernde Auswirkungen der genannten Fehler ist eine hohe Ausfallsicherheit des Bremssystems realisiert.

Die Diagnose des Bremssystems dient der Feststellung seiner Funktionsfähigkeit. Im Rahmen der Diagnose wird insoweit festgestellt, ob mittels der Radbremse die bestimmte Kraft auf den Bremskolben bewirkt werden kann beziehungsweise ob dies, insbesondere aufgrund von Undichtigkeiten, nicht möglich ist. Die Radbremse verfügt zusätzlich zu dem Bremskolben und der Bremsbacke beziehungsweise dem Bremsbelag über die Bremsscheibe oder die Bremstrommel.

Im Falle der Bremsscheibe liegt eine Ausgestaltung als Scheibenbremse und im Falle der Bremstrommel als Trommelbremse vor. Selbstredend sind grundsätzlich auch andere Bremsen realisierbar. Von Bedeutung ist hierbei stets, dass das Aufbauen der Bremskraft an der Radbremse unterbunden wird, also auf das Rad, welchem die Radbremse zugeordnet ist, keine oder zumindest nur eine vernachlässigbare Bremskraft wirkt.

Während eines Bremsvorgangs des Kraftfahrzeugs mittels der Radbremse wird die Bremsbacke beziehungsweise der Bremsbelag von dem Bremskolben in Richtung der Bremsscheibe/die Bremstrommel beziehungsweise an die Bremsscheibe/Bremstrommel gedrängt, sodass ein Reibkontakt zwischen der Bremsbacke beziehungsweise dem Bremsbelag und der Bremsscheibe oder der Bremstrommel auftritt.

Das Durchführen der Diagnose soll nun jedoch derart erfolgen, dass mittels der Radbremse keine Bremskraft auf das entsprechende Rad aufgeprägt wird. Das bedeutet, dass während der Diagnose verhindert werden muss, dass die Bremsbacke beziehungsweise der Bremsbelag in Berührkontakt mit der Bremsscheibe oder der Bremstrommel tritt. Entsprechend wird zwar die Radbremse mit dem Bremsdruck, welcher dem Diagnosebremsdruck entspricht, beaufschlagt, zugleich jedoch auf den Bremskolben die Gegenkraft aufgebracht.

Die Gegenkraft ist der Kraft entgegengerichtet, weist jedoch in wenigstens einer Stellung des Bremskolbens denselben Betrag auf, sodass bei konstant bleibendem Bremsdruck auch der Bremskolben seine Stellung beibehält. Entsprechend wird auch bei an der Radbremse vorliegendem Bremsdruck ein Wirkkontakt zwischen Bremsbacke beziehungsweise Bremsbelag und Bremsscheibe verhindert, nämlich indem die Gegenkraft derart gewählt und aufgebracht wird, dass die Bremsbacke beziehungsweise der Bremsbelag beabstandet von der Bremsscheibe oder der Bremstrommel verbleibt.

Es ist vorgesehen, dass die Diagnose bei durch einen Fahrer des Kraftfahrzeugs unbetätigter Radbremse durchgeführt wird. Vorstehend wurde erläutert, dass der Fahrer des Kraftfahrzeugs die Radbremse üblicherweise durch Betätigen des Bedienelements betätigt, wobei besonders bevorzugt mittels eines Sensors die von dem Fahrer gewünschte Vorgabebremskraft beziehungsweise der entsprechende Vorgabebremsdruck ermittelt wird. Es ist vorgesehen, dass die Diagnose des Bremssystems erfolgt, wenn die Vorgabebremskraft unter einem bestimmten Schwellenwert liegt, insbesondere gleich Null ist. Der an der Radbremse zum Durchführen der Diagnose angelegte Bremsdruck beziehungsweise Diagnosebremsdruck wird insoweit mittels der in diesem Fall bevorzugt als Pumpe ausgestalteten Bremsdruckquelle bereitgestellt.

Eine Weiterbildung der Erfindung sieht vor, dass der Bremskolben zum Aufbringen der Gegenkraft mittels einer Blockiereinrichtung festgesetzt wird. Die Blockiereinrichtung kann grundsätzlich beliebig ausgestaltet sein, solange sie den Bremskolben in einer bestimmten Stellung festsetzt, in welcher die Bremsbacke beziehungsweise der Bremsbelag beabstandet von der Bremsscheibe oder der Bremstrommel vorliegt. Die Blockiereinrichtung kann beispielsweise als Stellbolzen vorliegen, welcher den Bremskolben in einer ersten Stellung festsetzt und in einer zweiten Stellung zur Verlagerung freigibt.

Die Ausgestaltung der Erfindung sieht vor, dass die Radbremse ein von einer ersten Lüftspielstellung und einer zweiten Lüftspielstellung begrenztes Lüftspiel aufweist, indem die Bremsbacke beziehungsweise der Bremsbelag unter Einhaltung eines Abstands in Richtung der Bremsscheibe oder der Bremstrommel verlagert werden kann, und dass der Bremskolben mittels einer Rückstelleinrichtung derart kraftbeaufschlagt wird, dass die Gegenkraft zwischen der ersten Lüftspielstellung und der zweiten Lüftspielstellung auf eine zum Festsetzen des Bremskolbens benötigte Kraft eingestellt wird. Unter dem Lüftspiel ist ein Abstand der Bremsbacke beziehungsweise des Bremsbelags von der Bremsscheibe oder der Bremstrommel zu verstehen, welcher bei unbetätigter Radbremse vorliegt.

Die erste Lüftspielstellung kann beispielsweise einer Ruhestellung des Bremskolbens beziehungsweise der Bremsbacke oder des Bremsbelags entsprechen, welche bei unbetätigter Radbremse vorliegt. Alternativ kann die erste Lüftspielstellung auch von dieser Ausgangsstellung beabstandet vorliegen und insoweit zwischen der Ausgangsstellung und der zweiten Lüftspielstellung angeordnet sein.

Die zweite Lüftspielstellung ist beispielsweise eine Stellung, in welcher die Bremsbacke beziehungsweise der Bremsbelag gerade so weit von der Bremsscheibe entfernt ist, dass er nicht mit ihr in Berührkontakt steht. In der zweiten Lüftspielstellung liegt also ein wesentlich geringerer Abstand der Bremsbacke beziehungsweise des Bremsbelags von der Bremsscheibe oder der Bremstrommel vor als in der ersten Lüftspielstellung. Innerhalb des Lüftspiels kann die Bremsbacke beziehungsweise der Bremsbelag unter Einhaltung des Abstands in Richtung der Bremsscheibe oder der Bremstrommel verlagert werden. Entsprechend liegt innerhalb des Lüftspiels stets die Bremsbacke beziehungsweise der Bremsbelag von der Bremsscheibe oder der Bremstrommel beabstandet vor.

Das Bremssystem beziehungsweise die Radbremse weist nun die Rückstelleinrichtung vor, welche eine Federkraft auf den Bremskolben bewirkt. Die mittels der Rückstelleinrichtung erzeugte Federkraft entspricht der Gegenkraft, welche der durch den Bremsdruck bewirkten Kraft entgegengerichtet ist. Die Gegenkraft wird dabei derart gewählt, dass sie den Bremskolben zwischen der ersten Lüftspielstellung und der zweiten Lüftspielstellung festsetzt, dass also der Bremskolben zunächst aus seiner Ausgangsstellung heraus und in Richtung der zweiten Lüftspielstellung verlagert wird. Besonders bevorzugt ist die Gegenkraft derart gewählt, dass der Bremskolben zwischen der ersten Lüftspielstellung und der zweiten Lüftspielstellung oder alternativ in der zweiten Lüftspielstellung festgesetzt wird.

Eine weitere bevorzugte Ausführungsform der Erfindung sieht vor, dass die Gegenkraft zwischen der ersten Lüftspielstellung und der zweiten Lüftspielstellung, insbesondere ausgehend von der ersten Lüftspielstellung und/oder bis hin zu der zweiten Lüftspielstellung, größer werdend eingestellt wird. Besonders bevorzugt wächst die Gegenkraft über der zwischen der ersten Lüftspielstellung und der zweiten Lüftspielstellung liegenden Strecke mit einem bestimmten Verlauf an. Der Verlauf kann beispielsweise linear sein. Insbesondere ist es vorgesehen, dass die Gegenkraft über die Strecke in Richtung der zweiten Lüftspielstellung durchgehend ansteigt, insbesondere stetig beziehungsweise kontinuierlich. Der Anstieg der Gegenkraft beginnt beispielsweise in der ersten Lüftspielstellung und/oder endet in der zweiten Lüftspielstellung.

Eine Weiterbildung der Erfindung sieht vor, dass die Gegenkraft durchgehend größer werdend eingestellt wird, insbesondere entsprechend eines bestimmten Verlaufs größer werdend. Hierauf wurde vorstehend bereits hingewiesen. Unter dem durchgehenden Größerwerden der Gegenkraft ist zu verstehen, dass diese über das Lüftspiel in Richtung der zweiten Lüftspielstellung hinweg nicht absinkt, sondern stets größer wird. Hierbei wird insbesondere der bestimmte Verlauf über der Strecke herangezogen.

Eine besonders bevorzugte weitere Ausführungsform der Erfindung sieht vor, dass die Gegenkraft in dem Lüftspiel oder über das Lüftspiel um mindestens 25 %, mindestens 50 %, mindestens 75 % oder mindestens 100 % größer werdend eingestellt wird. Beispielsweise liegt also in einer ersten Stellung des Bremskolbens eine erste Gegenkraft und in einer zweiten Stellung eine zweite Gegenkraft vor. Die erste Stellung liegt dabei näher an der ersten Lüftspielstellung als die zweite Stellung beziehungsweise umgekehrt die zweite Stellung näher an der zweiten Lüftspielstellung als an der ersten Lüftspielstellung. Es kann vorgesehen sein, dass die erste Stellung der ersten Lüftspielstellung und/oder die zweite Stellung der zweiten Lüftspielstellung entspricht. Die zweite Gegenkraft ist nun größer als die erste Gegenkraft, insbesondere um die genannten Werte.

Eine Weiterbildung der Erfindung sieht vor, dass als Bremsdruckquelle eine automatische Bremsdruckquelle verwendet wird. Die automatische Bremsdruckquelle liegt beispielsweise als Pumpe oder dergleichen vor. Die Bremsdruckquelle wird zum Durchführen der Diagnose mittels eines Steuergeräts zum Erzeugen des Bremsdrucks angesteuert, wobei das Steuergerät insbesondere auch zur Durchführung der Diagnose vorgesehen ist.

Schließlich kann im Rahmen einer weiteren bevorzugten Ausführungsform der Erfindung vorgesehen sein, dass bei der Diagnose ein der Radbremse zugeführtes Bremsfluidvolumen ermittelt wird. Auf derartige Art und Weise kann die Funktionsfähigkeit der Radbremse besonders zuverlässig festgestellt werden. Zum Betätigen der Radbremse und zum Durchführen der Diagnose ist es jeweils vorgesehen, der Radbremse mittels der Bremsdruckquelle Bremsfluid zuzuführen. Beispielsweise wird dieses Bremsfluid zuvor einem Vorratsbehälter entnommen.

Bevorzugt wird das der Radbremse während der Diagnose zugeführte Bremsfluidvolumen mittels eines Massenstrommessgeräts ermittelt, dessen Messwerte erfasst und über der Zeit aufsummiert oder integriert werden. Anschließend wird aus dem ermittelten Bremsfluidvolumen diejenige Stellung des Bremskolbens ermittelt, welche aufgrund des der Radbremse zugeführten Bremsfluidvolumens vorliegen sollte. Zudem wird beispielsweise die tatsächliche Stellung des Bremskolbens ermittelt. Weichen die beiden Stellungen voneinander ab, so kann auf einen Defekt der Radbremse und/oder des Bremssystems geschlossen werden. Anstelle des Massenstrommessgeräts kann ein Volumenstrommessgerät verwendet werden.

Alternativ oder zusätzlich ist es selbstredend möglich, das Bremsfluidvolumen auf andere Art und Weise zu bestimmen. Beispielsweise kann hierzu die Kolbenposition einer Pumpe herangezogen werden, welche entweder direkt mittels eines Sensors oder indirekt mittels eines Modells bestimmt wird. Auch bei Verwendung einer kontinuierlich oder quasikontinuierlich arbeitenden Pumpe, beispielsweise eine Radialkolben- oder Zahnradpumpe, kann aus den Eigenschaften und der Betriebsweise der Pumpe der Massenstrom beziehungsweise Volumenstrom rechnerisch bestimmt und integriert oder aufsummiert werden.

Die Erfindung betrifft weiterhin ein Bremssystem für ein Kraftfahrzeug, insbesondere zur Durchführung des vorstehend beschriebenen Verfahrens, wobei das Bremssystem über eine Bremsdruckquelle und wenigstens eine Radbremse verfügt, die mit einem mittels der Bremsdruckquelle bereitgestellten, auf einen Bremskolben wirkenden Bremsdruck beaufschlagbar ist.

Dabei ist vorgesehen, dass das Bremssystem zur Durchführung einer Diagnose des Bremssystems dazu ausgebildet ist, die Radbremse mit einem einem Diagnosebremsdruck entsprechenden, eine bestimmte Kraft auf den Bremskolben bewirkenden Bremsdruck zu beaufschlagen und auf den Bremskolben eine der Kraft entgegen gerichtete Gegenkraft aufzubringen, sodass das Aufbauen einer Bremskraft an der Radbremse unterbunden wird, insbesondere eine mit dem Bremskolben verbundene Bremsbacke beabstandet von einer Bremsscheibe oder einer Bremstrommel der Radbremse verbleibt.

Auf die Vorteile einer derartigen Ausgestaltung des Bremssystems beziehungsweise einer derartigen Vorgehensweise wurde bereits hingewiesen. Sowohl das Bremssystem für das Kraftfahrzeug als auch das Verfahren zu seinem Betreiben können gemäß den vorstehenden Ausführungen weitergebildet sein, sodass insoweit auf diese verwiesen wird. Wie vorstehend bereits erläutert, kann es vorgesehen sein, dass das Bremssystem derart ausgestaltet ist, dass es ein der Radbremse während der Diagnose zugeführte Bremsfluidvolumen ermittelt, insbesondere direkt oder indirekt.

Im Rahmen der Erfindung ist schließlich vorgesehen, dass die Radbremse ein von einer ersten Lüftspielstellung und einer zweiten Lüftspielstellung begrenztes Lüftspiel aufweist, in dem die Bremsbacke beziehungsweise der Bremsbelag unter Einhaltung eines Abstands in Richtung der Bremsscheibe oder der Bremstrommel verlagerbar ist, und dass der Bremskolben mittels einer Rückstelleinrichtung kraftbeaufschlagbar ist, wobei die Rückstelleinrichtung derart ausgebildet ist, dass die Gegenkraft zwischen der ersten Lüftspielstellung und der zweiten Lüftspielstellung einer zum Festsetzen des Bremskolbens benötigten Kraft entspricht. Auch hierzu wird auf die vorstehenden Ausführungen verwiesen.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung eines Bereichs eines Bremssystems für ein Kraftfahrzeug, nämlich eines Bereichs einer Radbremse, sowie
- Figur 2: ein Diagramm, in welchem unterschiedliche Kennlinien für einen Bremsdruck der Radbremse über einem der Radbremse zugeführten Bremsfluidvolumen aufgetragen sind.

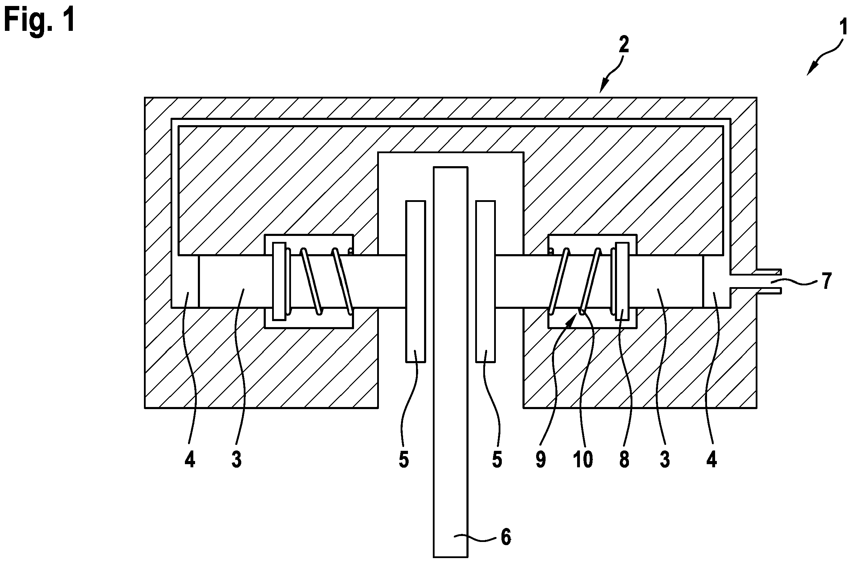

Die Figur 1 zeigt eine schematische Darstellung eines Bereichs eines Bremssystems 1, nämlich eines Bereichs einer Radbremse 2. Die Radbremse 2 verfügt über wenigstens einen Bremskolben 3, welcher in einem Bremszylinder 4 linear verlagerbar angeordnet ist. Der Bremskolben 3 ist mit einer Bremsbacke 5 verbunden, welche zum Bewirken einer Bremskraft mit einer Bremsscheibe 6 in Anlagekontakt treten kann. Die Bremsbacke 5 verfügt bevorzugt auf ihrer der Bremsscheibe 6 zugewandten Seite über einen Bremsbelag. Die Radbremse 2 liegt in dem hier vorgestellten Ausführungsbeispiel als Scheibenbremse vor. Selbstverständlich ist jedoch auch eine Ausgestaltung als Trommelbremse oder dergleichen möglich.

In dem hier dargestellten Ausführungsbeispiel sind zwei gegenüberliegende Bremskolben 3 und entsprechend zwei sich bezüglich der Bremsscheibe 6 gegenüberliegende Bremsbeläge 5 vorgesehen. Beide Bremszylinder 4 sind über eine gemeinsame Fluidleitung 7 an weitere Bereiche des Bremssystems 1 angeschlossen, insbesondere an eine Bremsdruckquelle. Nachfolgend wird lediglich auf einen der Bremskolben 3 und entsprechend nur einen der Bremsbeläge 5 eingegangen. Die Ausführungen sind jedoch stets analog auf den jeweils anderen Bremskolben 3 die jeweils andere Bremsbacke 5 anwendbar.

Es ist deutlich zu erkennen, dass an dem Bremskolben 3 ein Anschlagelement 8 ausgebildet ist, welches beispielsweise in Form eines Radialvorsprungs vorliegt, der insbesondere als Kreisringvorsprung ausgestaltet ist. Das Anschlagelement 8 kann einerseits zur Realisierung eines Endanschlags vorgesehen sein. Andererseits greift an dem Anschlagelement 8 eine Rückstelleinrichtung 9 an, welche - wie hier dargestellt - wenigstens ein Federelement 10 aufweist. Die Rückstelleinrichtung 9 beaufschlagt den Bremskolben 3 mit einer Gegenkraft, die einer bei Anlegen eines Bremsdrucks an der Radbremse 2 erzeugten Kraft entgegengerichtet ist. Diese Kraft drängt den Bremskolben 3 beziehungsweise die Bremsbacke 5 in Richtung der Bremsscheibe 6. Die Gegenkraft ist entsprechend in die entgegengesetzte Richtung gerichtet und drängt den Bremskolben 3 beziehungsweise die Bremsbacke 5 von der Bremsscheibe 6 fort.

Es ist nun vorgesehen, dass zum Durchführen einer Diagnose des Bremssystems 1 die Radbremse 2 mit einem einem Diagnosebremsdruck entsprechenden Bremsdruck beaufschlagt wird. Dieser Diagnosebremsdruck bewirkt die bestimmte Kraft auf den Bremskolben 3. Die mittels der Rückstelleinrichtung 9 bewirkte Gegenkraft wird nun derart ausgelegt, dass die Bremsbacke 5 bei Vorliegen des Diagnosebremsdrucks beabstandet von der Bremsscheibe 6 verbleibt. Übersteigt dagegen der Bremsdruck den Diagnosebremsdruck, so kann die von dem Bremsdruck bewirkte Kraft die Gegenkraft überwinden, sodass schlussendlich die Bremsbacke 5 in Wirkkontakt mit der Bremsscheibe 6 treten kann beziehungsweise tritt, sodass mittels der Radbremse 2 eine bestimmte Bremskraft auf die Bremsscheibe 6 bewirkt wird.

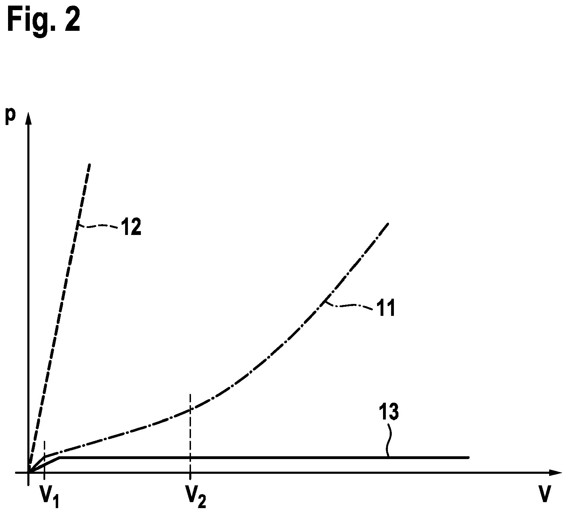

Die Figur 2 zeigt ein Diagramm, in welchem drei Verläufe für einen Bremsdruck p über ein Bremsfluidvolumen V dargestellt sind. Die Verläufe sind mit den Bezugszeichen 11, 12 und 13 gekennzeichnet. Es sei darauf hingewiesen, dass die Verläufe 11, 12 und 13 für ein Bremssystem 1 wiedergegeben sind, das zum Durchführen der Diagnose ausgestaltet ist. Der Verlauf 11 beschreibt eine Kennlinie der Radbremse 2 in funktionstüchtigem Zustand. Es ist erkennbar, dass bis zu einem Volumen von V = V₁ der Bremsdruck p zunächst stärker ansteigt als dies bei infinitesimal größerem Bremsfluidvolumen V der Fall ist. Für ein Volumen von V₁ < V ≤ V₂ liegt das sogenannte Lüftspiel vor. In diesem steigt der Bremsdruck p über dem Bremsfluidvolumen V im Wesentlichen linear an.

Das Lüftspiel umfasst Stellungen, in welchen die Bremsbacke 5 noch nicht mit der Bremsscheibe 6 in Kontakt tritt. Dies ist erst ab dem Volumen V = V₂ der Fall. Es ist erkennbar, dass für V > V₂ der Bremsdruck p über dem Bremsfluidvolumen V nicht mehr linear, sondern vielmehr überproportional ansteigt. Ab dem Volumen V = V₂ wird insoweit mittels der Radbremse 2 eine Bremskraft bewirkt. Die Diagnose des Bremssystems 1 kann nun innerhalb eines Bereichs vorgenommen werden, welcher zwischen dem Bremsfluidvolumen V₁ und V₂ liegt. In diesem Bereich ist bereits eine Losbrechkraft der Radbremse 2 überwunden, wohingegen andererseits die Bremsbacke 5 noch nicht an der Bremsscheibe 6 anliegt.

Die Verläufe 12 und 13 zeigen Kennlinien der Radbremse 2 bei Auftreten unterschiedlicher Defekte. Während der Verlauf 12 die Kennlinie bei einer hydraulischen oder mechanischen Blockade rein beispielhaft andeutet, zeigt der Verlauf 13 die Kennlinie bei einer hydraulischen Leckage. Es wird deutlich, dass im Falle des Verlaufs 12 der Bremsdruck p über dem Fluidvolumen V stark ansteigt, wohingegen dies für den Verlauf 13 nicht der Fall ist.

Mit der beschriebenen Ausgestaltung des Bremssystems 1 beziehungsweise mithilfe der vorstehend erläuterten Vorgehensweise kann auf einfache Art und Weise eine zuverlässige Diagnose des Bremssystems 1 durchgeführt werden. Dabei ist insbesondere eine vollautomatische Durchführung der Diagnose möglich, ohne dass ein Fahrer des Kraftfahrzeugs eingreifen muss, beispielsweise durch Betätigen eines Bedienelements, insbesondere eines Bremspedals.

## Patentansprüche

1. Verfahren zum Betreiben eines Bremssystems (1) für ein Kraftfahrzeug, wobei das Bremssystem (1) über eine Bremsdruckquelle und wenigstens eine Radbremse (2) verfügt, die mit einem mittels der Bremsdruckquelle bereitgestellten, auf einen Bremskolben (3) wirkenden Bremsdruck beaufschlagbar ist, **dadurch gekennzeichnet, dass** zum Durchführen einer Diagnose des Bremssystems (1) bei durch einen Fahrer des Kraftfahrzeugs unbetätigter Radbremse (2) die Radbremse (2) mit einem einem Diagnosebremsdruck entsprechenden, eine bestimmte Kraft auf den Bremskolben (3) bewirkenden Bremsdruck beaufschlagt und auf den Bremskolben (3) eine der Kraft entgegen gerichtete Gegenkraft aufgebracht wird, sodass das Aufbauen einer Bremskraft an der Radbremse (2) unterbunden wird, wobei die Radbremse (2) ein von einer ersten Lüftspielstellung und einer zweiten Lüftspielstellung begrenztes Lüftspiel aufweist, indem eine mit dem Bremskolben (3) verbundene Bremsbacke (5) unter Einhaltung eines Abstands in Richtung einer Bremsscheibe (6) oder einer Bremstrommel der Radbremse (2) verlagert werden kann, und dass der Bremskolben (3) mittels einer Rückstelleinrichtung (9) derart kraftbeaufschlagt wird, dass die Gegenkraft zwischen der ersten Lüftspielstellung und der zweiten Lüftspielstellung auf eine zum Festsetzen des Bremskolbens (3) benötigte Kraft eingestellt wird.

2. Verfahren nach Anspruch 1, **dadurch gekennzeichnet, dass** der Bremskolben (3) zum Aufbringen der Gegenkraft mittels einer Blockiereinrichtung festgesetzt wird.

3. Verfahren nach einem der vorhergehenden Ansprüche, **dadurch gekennzeichnet, dass** die Gegenkraft zwischen der ersten Lüftspielstellung und der zweiten Lüftspielstellung, insbesondere ausgehend von der ersten Lüftspielstellung und/oder bis hin zu der zweiten Lüftspielstellung, größer werdend eingestellt wird.

4. Verfahren nach einem der vorhergehenden Ansprüche, **dadurch gekennzeichnet, dass** die Gegenkraft durchgehend größer werdend eingestellt wird, insbesondere entsprechend eines bestimmten Verlaufs größer werdend.

5. Verfahren nach einem der vorhergehenden Ansprüche, **dadurch gekennzeichnet, dass** die Gegenkraft in dem Lüftspiel oder über das Lüftspiel um mindestens 25 %, mindestens 50 %, mindestens 75 % oder mindestens 100 % größer werdend eingestellt wird.

6. Verfahren nach einem der vorhergehenden Ansprüche, **dadurch gekennzeichnet, dass** als Bremsdruckquelle eine automatische Bremsdruckquelle verwendet wird.

7. Verfahren nach einem der vorhergehenden Ansprüche, **dadurch gekennzeichnet, dass** bei der Diagnose ein der Radbremse (2) zugeführtes Bremsfluidvolumen (V) ermittelt wird.

8. Bremssystem (1) für ein Kraftfahrzeug, insbesondere zur Durchführung des Verfahrens nach einem oder mehreren der vorhergehenden Ansprüche, wobei das Bremssystem (1) über eine Bremsdruckquelle und wenigstens eine Radbremse (2) verfügt, die mit einem mittels der Bremsdruckquelle bereitgestellten, auf einen Bremskolben (3) wirkenden Bremsdruck beaufschlagbar ist, **dadurch gekennzeichnet, dass** das Bremssystem (1) zur Durchführung einer Diagnose des Bremssystems (1) dazu ausgebildet ist, bei durch einen Fahrer des Kraftfahrzeugs unbetätigter Radbremse (2) die Radbremse (2) mit einem einem Diagnosebremsdruck entsprechenden, eine bestimmte Kraft auf den Bremskolben (3) bewirkenden Bremsdruck zu beaufschlagen und auf den Bremskolben (3) eine der Kraft entgegen gerichtete Gegenkraft aufzubringen, sodass das Aufbauen einer Bremskraft an der Radbremse (2) unterbunden wird, wobei die Radbremse (2) ein von einer ersten Lüftspielstellung und einer zweiten Lüftspielstellung begrenztes Lüftspiel aufweist, indem eine mit dem Bremskolben (3) verbundene Bremsbacke (5) unter Einhaltung eines Abstands in Richtung einer Bremsscheibe (6) oder einer Bremstrommel der Radbremse (2) verlagert werden kann, und dass der Bremskolben (3) mittels einer Rückstelleinrichtung (9) derart kraftbeaufschlagt wird, dass die Gegenkraft zwischen der ersten Lüftspielstellung und der zweiten Lüftspielstellung auf eine zum Festsetzen des Bremskolbens (3) benötigte Kraft eingestellt wird.

9. Bremssystem nach Anspruch 8, **dadurch gekennzeichnet, dass** die Radbremse (2) ein von einer ersten Lüftspielstellung und einer zweiten Lüftspielstellung begrenztes Lüftspiel aufweist, indem die Bremsbacke (5) unter Einhaltung eines Abstands in Richtung der Bremsscheibe (6) oder der Bremstrommel verlagerbar ist, und dass der Bremskolben (3) mittels einer Rückstelleinrichtung (9) kraftbeaufschlagbar ist, wobei die Rückstelleinrichtung (9) derart ausgebildet ist, dass die Gegenkraft zwischen der ersten Lüftspielstellung und der zweiten Lüftspielstellung einer zum Festsetzen des Bremskolbens (3) benötigten Kraft entspricht.

## Claims

1. Method for operating a braking system (1) for a motor vehicle, the braking system (1) having a brake pressure source and at least one wheel brake (2) that can be acted upon by a brake pressure that is provided by means of the brake pressure source and acts on a brake piston (3), **characterised in that in that**, for carrying out diagnostics of the braking system (1) while the wheel brake (2) is not actuated by a driver of the motor vehicle, the wheel brake (2) is acted upon by a brake pressure corresponding to a diagnostic brake pressure and producing a specified force on the brake piston (3), and a counterforce directed counter to the force is applied to the brake piston (3), so that the build-up of a braking force on the wheel brake (2) is prevented, the wheel brake (2) having a clearance delimited by a first clearance position and a second clearance position, while a brake shoe (5) connected to the brake piston (3) can be displaced in the direction of a brake disc (6) or a brake drum of the wheel brake (2) while maintaining a separation therefrom, and **in that** the brake piston (3) is subjected to force by means of a resetting device (9) in such a way that between the first clearance position and the second clearance position the counterforce is set to a force required for locking the brake piston (3).

2. Method according to claim 1, **characterised in that** for applying the counterforce the brake piston (3) is locked by means of a blocking device.

3. Method according to any one of the preceding claims, **characterised in that** the counterforce is set to increase between the first clearance position and the second clearance position, in particular starting from the first clearance position and/or up to the second clearance position.

4. Method according to any one of the preceding claims, **characterised in that** the counterforce is set to increase continuously, in particular to increase according to a specified behaviour.

5. Method according to any one of the preceding claims, **characterised in that** the counterforce is set to increase in the clearance or over the clearance by at least 25%, at least 50%, at least 75% or at least 100%.

6. Method according to any one of the preceding claims, **characterised in that** an automatic brake pressure source is used as the brake pressure source.

7. Method according to any one of the preceding claims, **characterised in that** during the diagnostics a brake fluid volume (V) supplied to the wheel brake (2) is determined.

8. Braking system (1) for a motor vehicle, in particular for carrying out the method according to one or more of the preceding claims, the braking system (1) having a brake pressure source and at least one wheel brake (2) that can be acted upon by a brake pressure provided by means of the brake pressure source and acting on a brake piston (3), **characterised in that,** for carrying out diagnostics of the braking system (1), the braking system (1) is configured in such a way that, while the wheel brake (2) is not actuated by a driver of the motor vehicle, the wheel brake (2) is acted upon by a braking pressure corresponding to a diagnostic braking pressure and causing a specified force to act on the brake piston (3), and a counterforce directed counter to the force is applied to the brake piston (3), so that the build-up of a braking force on the wheel brake (2) is prevented, the wheel brake (2) having a clearance delimited by a first clearance position and a second clearance position, while a brake shoe (5) connected to the brake piston (3) can be displaced in the direction of a brake disc (6) or a brake drum of the wheel brake (2) while maintaining a separation, and **in that** the brake piston (3) is subjected to force by means of a resetting device (9) in such a way that between the first clearance position and the second clearance position the counterforce is set to a force required for locking the brake piston (3).

9. Braking system according to claim 8, **characterised in that** the wheel brake (2) has a clearance delimited by a first clearance position and a second clearance position, while the brake shoe (5) can be displaced in the direction of the brake disc (6) or the brake drum while maintaining a separation, and **in that** by means of a resetting device (9) the brake piston (3) can be acted upon by force, the resetting device (9) being configured in such a way that between the first clearance position and the second clearance position the counterforce corresponds to a force required for locking the brake piston (3).

## Revendications

1. Procédé de fonctionnement d'un système de freinage (1) pour un véhicule automobile, dans lequel le système de freinage (1) dispose d'une source de pression de freinage et d'au moins un frein de roue (2) qui peut être sollicité par une pression de freinage mise à disposition au moyen de la source de pression de freinage et agissant sur un piston de frein (3), **caractérisé en ce que**, pour effectuer un diagnostic du système de freinage (1) lorsque le frein de roue (2) n'est pas actionné par un conducteur du véhicule automobile, le frein de roue (2) est soumis à une pression de freinage correspondant à une pression de freinage de diagnostic et provoquant une force déterminée sur le piston de frein (3), et une force antagoniste opposée à la force est appliquée sur le piston de frein (3), de sorte que l'accumulation d'une force de freinage sur le frein de roue (2) est empêchée, dans lequel le frein de roue (2) présente un jeu limité par une première position de jeu et une seconde position de jeu, **en ce qu'**une mâchoire de frein (5) connectée au piston de frein (3) peut être déplacée en direction d'un disque de frein (6) ou d'un tambour de frein du frein de roue (2) en respectant un écartement, et **en ce que** le piston de frein (3) est soumis à une force au moyen d'un dispositif de rappel (9) de sorte que la force antagoniste entre la première position de jeu et la seconde position de jeu est réglée à une force nécessaire pour immobiliser le piston de frein (3).

2. Procédé selon la revendication 1, **caractérisé en ce que** le piston de frein (3) est fixé au moyen d'un dispositif de blocage pour appliquer la force antagoniste.

3. Procédé selon l'une quelconque des revendications précédentes, **caractérisé en ce que** la force antagoniste est réglée de manière croissante entre la première position de jeu et la seconde position de jeu, en particulier en partant de la première position de jeu et/ou en allant jusqu'à la seconde position de jeu.

4. Procédé selon l'une quelconque des revendications précédentes, **caractérisé en ce que** la force antagoniste est réglée de manière à augmenter de façon continue, en particulier de manière à augmenter selon une certaine courbe.

5. Procédé selon l'une quelconque des revendications précédentes, **caractérisé en ce que** la force antagoniste est réglée de manière à augmenter d'au moins 25 %, d'au moins 50 %, d'au moins 75 % ou d'au moins 100 % dans le jeu ou sur le jeu.

6. Procédé selon l'une quelconque des revendications précédentes, **caractérisé en ce qu'**une source de pression de freinage automatique est utilisée en tant que source de pression de freinage.

7. Procédé selon l'une quelconque des revendications précédentes, **caractérisé en ce que**, lors du diagnostic, un volume de fluide de freinage (V) alimentant le frein de roue (2) est déterminé.

8. Système de freinage (1) pour un véhicule automobile, en particulier pour la mise en œuvre du procédé selon une ou plusieurs des revendications précédentes, dans lequel le système de freinage (1) dispose d'une source de pression de freinage et d'au moins un frein de roue (2) qui peut être sollicité par une pression de freinage mise à disposition au moyen de la source de pression de freinage et agissant sur un piston de frein (3), **caractérisé en ce que** le système de freinage (1) est conçu pour effectuer un diagnostic du système de freinage (1), lorsque le frein de roue (2) n'est pas actionné par un conducteur du véhicule automobile, pour appliquer au frein de roue (2) une pression de freinage correspondant à une pression de freinage de diagnostic et provoquant une force déterminée sur le piston de frein (3) et pour appliquer au piston de frein (3) une force antagoniste opposée à la force, de sorte que l'accumulation d'une force de freinage sur le frein de roue (2) est empêchée, dans lequel le frein de roue (2) présente un jeu limité par une première position de jeu et une seconde position de jeu, **en ce qu'**une mâchoire de frein (5) connectée au piston de frein (3) peut être déplacée en direction d'un disque de frein (6) ou d'un tambour de frein du frein de roue (2) en respectant un écartement, et **en ce que** le piston de frein (3) est soumis à une force au moyen d'un dispositif de rappel (9) de sorte que la force antagoniste entre la première position de jeu et la seconde position de jeu est réglée à une force nécessaire pour immobiliser le piston de frein (3).

9. Système de freinage selon la revendication 8, **caractérisé en ce que** le frein de roue (2) présente un jeu limité par une première position de jeu et une seconde position de jeu, **en ce que** la mâchoire de frein (5) peut être déplacée en direction du disque de frein (6) ou du tambour de frein en respectant un écartement, et **en ce que** le piston de frein (3) peut être sollicité par une force au moyen d'un dispositif de rappel (9), dans lequel le dispositif de rappel (9) est conçu de sorte que la force antagoniste entre la première position de jeu et la seconde position de jeu correspond à une force nécessaire pour fixer le piston de frein (3).
